# EUROPÄISCHE PATENTANMELDUNG

(11) **EP 0 698 482 A2**
(43) Veröffentlichungstag der Anmeldung: **28.02.1996**
(21) Anmeldenummer: 95112884.2
(22) Anmeldetag: 16.08.1995
(51) Int. Cl.: B32B 1/08, F16L 55/02, B32B 5/18, B32B 3/30, E04B 1/82

(54) **Dämmaterial**

(30) Priorität: 16.08.1994 DE 4429045
(71) Anmelder: E. MISSEL GmbH, D-70337 Stuttgart (DE)
(72) Erfinder:
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Die Erfindung betrifft ein Dämmaterial für Rohrleitungen, Formstücke, Sanitärgegenstände und dgl. mit zumindest einer körperschall- und zumindest einer luftschalldämmenden Schicht.

## Beschreibung

Die Erfindung betrifft ein Dämmaterial für Rohrleitungen, Formstücke, Sanitärgegenstände, Maschinenkapselungen, haustechnische Geräte und Anlagen, Geräuschquellen in mechanischen Werkstätten und dgl. mit zumindest zwei übereinander angeordneten Schichten, wobei zumindest eine Schicht körperschalldämmend ausgebildet ist.

Mit derartigen Dämmaterialien werden beispielsweise Abwasserrohre, in Abwassersystemen verwendete Abzweige, Bögen, Übergangsstücke und dergleichen, Spülkästen, Magnetventile, Wasserzuführungsleitungen etc. ummantelt. Auf diese Weise kann durch Absorption und/oder Reflexion der in dem ummantelten Element entstehenden Geräusche durch das Dämmaterial bis zu einem gewissen Maß eine Verringerung der nach außen hörbaren und somit störenden Geräusche erreicht werden.

Ein Dämmaterial der angegebenen Art, das zur Dämmung von Rohrleitungen geeignet ist, ist beispielsweise aus der europäischen Patentanmeldung EP-A-0 505 759 bekannt. Dieses Dämmaterial weist eine mechanisch stabile Außenschicht und eine schalldämmende Innenschicht auf, wobei beide Schichten zu einem schlauchförmigen Verbund zusammengefaßt sind.

Eine Aufgabe der vorliegenden Erfindung besteht darin, ein Dämmaterial zu schaffen, mit dem eine möglichst gute und gegenüber dem bekannten Stand der Technik verbesserte Schalldämpfung und/oder Schalldämmung erzielbar ist.

Erfindungsgemäß wird dies dadurch erreicht, daß zumindest eine weitere Schicht luftschalldämmend ausgebildet ist.

Der Erfindung liegt somit die Erkenntnis zugrunde, daß neben den beispielsweise in der Haustechnik überwiegend durch Körperschall hervorgerufenen Geräuschen auch ein gewisser, wenn auch wesentlich geringerer Anteil von Geräuschen durch reinen, direkten Luftschall entsteht. Der Luftschallanteil wird durch körperschallreduzierende Schichten in der Regel nicht oder nur unzureichend vermindert.

Aus diesem Grunde wird erfindungsgemäß vorgeschlagen, zusätzlich zu einer körperschalldämmenden Schicht zumindest eine luftschalldämmende Schicht vorzusehen. So wird mit dem erfindungsgemäßen Dämmaterial gegenüber dem Stand der Technik ein deutlich verbesserter Schalldämmeffekt erzielt, da sowohl die über Körperschall als auch die über Luftschall übertragenen störenden Geräusche vom erfindungsgemäßen Dämmaterial weitestgehend reduziert werden.

Die körperschalldämmende Schicht kann aus einem weichen Material, insbesondere aus geschlossenzelligem Schaumstoff geringer Dichte bestehen. Vorzugsweise wird eine Schicht aus geschlossenzelligem Polyethylen verwendet.

Diese körperschalldämmende Schicht kann weiterhin so ausgebildet sein, daß sie zugleich wärmedämmende Eigenschaften aufweist. Ebenso ist es jedoch beim erfindungsgemäßen Dämmaterial auch möglich, eine separate, wärmedämmende Schicht vorzusehen, die im übrigen in einem gewissen Temperaturbereich gleichzeitig einen Schutz gegenüber Tauwasserausfall bieten kann.

Die erfindungsgemäß zusätzlich vorgesehene luftschalldämmende Schicht besteht vorzugsweise aus einem Material hoher Dichte, wobei hierfür Metall, insbesondere Blei, Stahl, Kupfer oder Messing und/oder ein silikatischer Werkstoff, wie z.B. Sand, verwendet werden kann. Für bestimmte Anwendungsfälle kann es auch sinnvoll sein, Mischungen aus verschiedenen der angegebenen Materialien zu verwenden.

Die luftschalldämmende Schicht ist bevorzugt flexibel ausgebildet, so daß diese Schicht im Verbund mit den anderen Schichten des erfindungsgemäßen Dämmaterials über zu dämmende Gegenstände unterschiedlicher Form gewickelt, gelegt oder gezogen werden kann.

Die Dimensionierung der luftschalldämmenden Schicht ist entsprechend den physikalischen bzw. akustischen Anforderungen und Gesetzmäßigkeiten zu wählen. Bei besonders starken, über Luftschall übertragenen Geräuschen muß die luftschalldämmende Schicht aus einem besonders dichten Material bestehen bzw. mit einer solchen Schichtdicke ausgeführt sein, daß sich ein ausreichender Schalldämmeffekt ergibt.

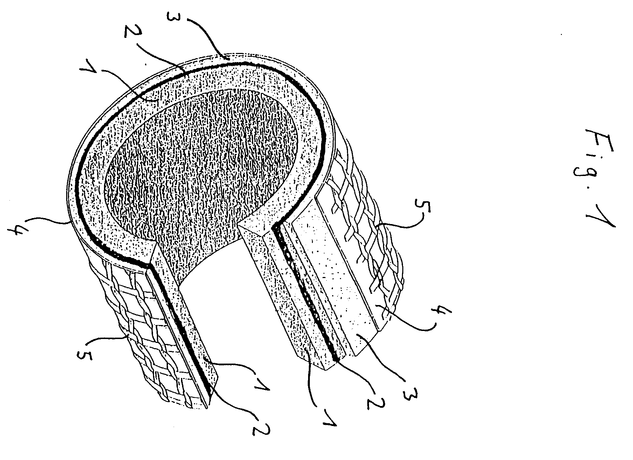

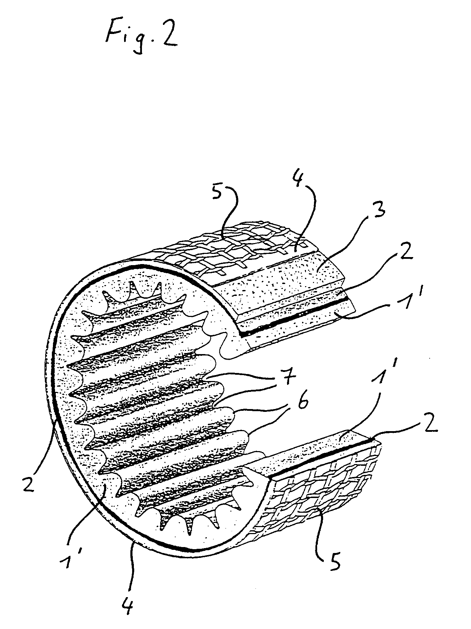

Der körper- und luftschallreduzierende Verbund unterschiedlicher Schichten wird vorzugsweise in einem Abstand von etwa 1 mm bis 10 mm von der schallabstrahlenden Geräuschquelle angeordnet, um optimale Verhältnisse der absorbierenden und reflektierenden Wirkungen der einzelnen Schichten zu erzielen. Grundsätzlich kann der Verbund bzw. der Aufbau der Schichten beliebig sein. Vorzugsweise aber ordnet man die weiche, körperschallreduzierende Schicht innen, an der der Schallquelle zugewandten Seite an und die Schicht mit der hohen Dichte, die der Luftschalldämmung dient, trägt man über der körperschallreduzierenden Schicht auf (vgl. Fig. 1 und Fig. 2).

Besonders gute Körperschalldämmeigenschaften kann man für bestimmte Geräuschquellen (z.B. Kunststoffrohre) erreichen, wenn die körperschalldämmende Schicht zumindest an der der schallabstrahlenden Oberfläche zugewandten Seite Hervorhebungen und Vertiefungen, insbesondere in Form einer rillenähnlichen Noppen- und/oder Gitterstruktur aufweist. Dabei ist es von Vorteil, wenn sich die körperschalldämmende Schicht - wie vorstehend bereits erwähnt - nicht bis an die dem zu dämmenden Gegenstand zugewandte Oberfläche des Dämmaterials erstreckt, sondern ein gewiser Luftspalt zwischen Dämmaterial und schallabstrahlender Oberfläche bestehen bleibt.

Falls das erfindungsgemäße Dämmaterial schlauchförmig ausgebildet wird, sollten sich aus verarbeitungstechnischer Sicht die Hervorhebungen und Vertiefungen in Form von Rillen der körperschalldämmenden Schicht vorzugsweise axial erstrecken.

Ein Vorteil der Verwendung einer Hervorhebungen und Vertiefungen aufweisenden körperschalldämmenden Schicht besteht darin, daß diese Schicht als flächiges Schichtmaterial auf wirtschaftliche Weise hergestellt werden kann. Anschließend kann das Schichtmaterial in einfacher Weise mit weiteren Schichten verbunden werden und beispielsweise zu einem Dämmschlauch zur Dämmung von Rohren verformt werden.

Weiterhin ist es bei Verwendung eines Rillenprofils von Vorteil, daß beim Verformen einer flächig hergestellten körperschalldämmenden Schicht zu einem schlauchförmigen Gebilde die Zellengröße des Schaumstoffmaterials zumindest in den zwischen den Rillen befindlichen Hervorhebungen nicht verändert, insbesondere nicht verkleinert wird. Dies ist von Bedeutung, da die Zellengröße des Schaumstoffmaterials Einfluß auf dessen Dämpfungseigenschaften hat. Die Zellgröße sollte deshalb beispielsweise durch ein Zusammenpressen des Schaumstoffmaterials in bestimmten Bereichen nicht unkontrolliert verändert werden.

Bei einer bevorzugten Ausführungsform der Erfindung wird auf der der Schallseite abgewandten Seite der beiden körper- bzw. luftschalldämmenden Schichten eine Faser- oder Schaumstoffschicht angeordnet. Bei Verwendung einer Faserschicht können beispielsweise miteinander vernadelte Kunststoff-Fasern zum Einsatz kommen. Besonders gute Dämmeigenschaften lassen sich dann erzielen, wenn die Faserschicht eine geringe Dichte und einen vergleichsweise hohen Luftanteil aufweist. Die Dicke der Faser- bzw. Schaumstoffschicht (Polsterlage) beträgt in der Regel einen Bruchteil der Gesamtdicke des Verbundes und kann beispielsweise zwischen 1 und 2 mm liegen.

Wenn die luftschallreduzierende Schicht aus einem homogenen Metall besteht, erfüllt diese Schicht auch die Funktion einer Feuchtigkeits- und Dampfsperre. Besteht diese Schicht aus granuliertem Material oder ganz allgemein aus nichtmetallischem Werkstoff, dann kann in einer weiteren bevorzugten Ausführungsform der Erfindung auf der der Schallseite abgewandten Seite der beiden körper- bzw. luftschalldämmenden Schichten eine weitere Schicht in Form einer dampfdichten oder zumindest dampfbremsenden Folie, die vorzugsweise aus Polyethylen besteht, angeordnet werden, wobei zwischen dieser Schicht und einer der Schallseite abgewandten Außenschicht eine zur Tauwasseraufnahme geeignete, insbesondere als Faserschicht ausgebildete Pufferschicht angeordnet ist. Die Faserschicht kann dabei entsprechend den im vorstehenden Absatz angegebenen Merkmalen ausgebildet sein.

Die Gesamtdicke der schallseitig von der dampfdichten oder dampfbremsenden Schicht angeordenten Schichten ist bevorzugt derart gewählt, daß unter Berücksichtigung der Temperatur des in dem zu dämmenden Element geführten Mediums und der Umgebungsbedingungen die Taupunkttemperatur jeweils auf einen Bereich außerhalb der dampfdichten bzw. der dampfbremsenden Folie verlagert ist.

Durch diesen Aufbau kann sichergestellt werden, daß die Taupunkttemperatur in einem Bereich außerhalb der körper- und luftschalldämmenden Schichten gelegen ist und das gegebenenfalls an der dampfdichten oder dampfbremsenden Schicht anfallende Tauwasser von der bevorzugt aus synthetischen Fasern bestehenden Polsterlage aufgenommen wird. Zwischenzeitlich in dieser Polsterlage gespeichertes Tauwasser beeinträchtigt die Dämmeigenschaften der innenliegenden Schichten nicht.

Die dem zu dämmenden Gegenstand abgewandte Oberfläche des erfindungsgemäßen Dämmaterials kann durch ein reißfestes Material, insbesondere durch ein verstärkendes Gittergewebe gebildet sein. Bei der vorstehend erwähnten Ausführungsform der Erfindung, in der zwischen einer dampfdichten oder dampfbremsenden Schicht und einer Außenschicht eine Polsterlage angeordnet ist, kann die Außenschicht aus einem derartigen reißfesten Material bestehen.

Ein mit einem integrierten oder aufkaschierten reißfesten Material versehenes Dämmaterial ist gegen Beschädigungen unempfindlich, da eventuell auftretende Risse in der Außenschicht auf kleinflächige Bereiche begrenzt werden, wodurch die Gesamtreißfestigkeit erhöht wird. Dies wirkt sich besonders bei Verwendung des Dämmaterials auf Baustellen vorteilhaft aus.

Die einzelnen Schichten des erfindungsgemäßen Dämmaterials bilden bevorzugt einen Schlauchverbund, der zur Isolierung von Rohrelementen geeignet ist. Der Schlauchverbund kann dabei endlos oder in bestimmten Längen gefertigt werden.

Weiterhin ist es jedoch auch möglich, das erfindungsgemäße Dämmaterial so auszubilden, daß die einzelnen Schichten zu einem an den zu dämmenden Gegenstand angepaßten Verbundformstück zusammengefügt sind.

Das Verbundformstück kann dabei aus zumindest zwei Abschnitten bestehen, die aneinander mittels einer Näh-, Heft-, Klammer-, Klebe-, Nietverbindung und/oder dergleichen befestigbar sind. Derartige Verbundformstücke können entsprechend der europäischen Patentanmeldung EP-A-0 540 935 ausgebildet sein, wobei erfindungsgemäß zusätzlich zu dem dort beschriebenen Aufbau eine luftschalldämmende Schicht zum Einsatz kommt.

Um die Anbringung des erfindungsgemäßen Dämmaterials an dem zu dämmenden Element zu erleichtern, kann der Schlauchverbund bzw. das Verbundformstück im wesentlichen in Längsrichtung geschlitzt sein.

Ein entsprechender Schlitz wird bevorzugt mittels Haft-, Klett- und/oder Klebebänderen verschlossen, die am Schlauchverbund bzw. am Verbundformstück insbesondere beiderseits des Schlitzes befestigbar sind. Der Schlitz kann dabei insbesondere dann sicher und auf dauerhafte Weise verschlossen werden, wenn die der Schallseite abgewandte Oberfläche des erfindungsgemäßen Dämmaterials aus einem reißfesten Material, insbesondere aus einem verstärkenden Gittergewebe gebildet ist, da eine derartige Oberfläche besser zur Aufnahme von Kräften geeignet ist als eine relativ empfindliche Dämmschicht.

Bei Verwendung einer reißfesten Oberfläche läßt sich der Schlitz auf vorteilhafte Weise insbesondere auch zusätzlich mittels Klammern oder mittels einer Naht verschließen. Die Klammern bzw. die Naht führen dabei aufgrund der reißfesten Oberfläche nicht zu einem Einreißen des Dämmaterials.

Ausführungsbeispiele der Erfindung werden nachfolgend anhand der Zeichnung erläutert; es zeigt:
- Fig. 1: eine erste Ausführungsform eines einen Schlauchverbund bildenden erfindungsgemäßen Dämmaterials,
- Fig. 2: eine zweite Ausführungsform eines einen Schlauchverbund bildenden erfindungsgemäßen Dämmaterials,.
- Fig. 3: den möglichen Aufbau eines erfindungsgemäßen Dämmaterials gemäß einer dritten Ausführungsform,
- Fig. 4: den möglichen Aufbau eines erfindungsgemäßen Dämmaterials gemäß einer vierten Ausführungsform,
- Fig. 5: den möglichen Aufbau eines erfindungsgemäßen Dämmaterials gemäß einer fünften Ausführungsform und
- Fig. 6: den möglichen Aufbau eines erfindungsgemäßen Dämmaterials gemäß einer sechsten Ausführungsform.

Der in Fig. 1 gezeigte Schlauchverbund besteht aus fünf übereinander angeordneten, miteinander verbundenen und jeweils einen rohrförmigen Querschnitt aufweisenden Schichten.

Die innerste Schicht 1, deren Dicke mehr als die Hälfte der Gesamtdicke des Schlauchverbundes beträgt, ist aus einem körperschalldämmenden Material, beispielsweise aus geschlossenzelligem Polyethylen gebildet.

Radial außerhalb der Schicht 1 ist eine luftschalldämmende Schicht 2 angeordnet. Die luftschalldämmende Schicht 2 besteht aus einem Material hoher Dichte, beispielsweise aus einem Metall wie Blei, Stahl, Kupfer oder Messing. Ebenso kann diese Schicht aus einem silikatischen Material, wie z.B. Sand oder Gips gefertigt sein oder Mischungen der genannten Materialien enthalten.

Radial außerhalb der luftschalldämmenden Schicht 2 schließt sich eine Polsterlage 3 an, die beispielsweise aus miteinander vernadelten Kunststoff-Fasern oder einem Kunststoff-Schaum besteht.

Radial außerhalb der Polsterlage 3 ist eine dünne, feuchtigkeitssperrende Polyethylen-Folie 4 angeordnet, die an ihrer Außenseite mit einem reißfesten Gittergewebe 5 verbunden ist.

Der in Fig. 2 dargestellte Schlauchverbund entspricht im wesentlichen dem Schlauchverbund gemäß Fig. 1, wobei ein Unterschied darin besteht, daß die innenliegende körperschalldämmende Schicht 1' gemäß Fig. 2 auf ihrer Innenseite mit einem Rillenprofil versehen ist, das durch axial verlaufende Hervorhebungen 6 und Vertiefungen 7 gebildet ist.

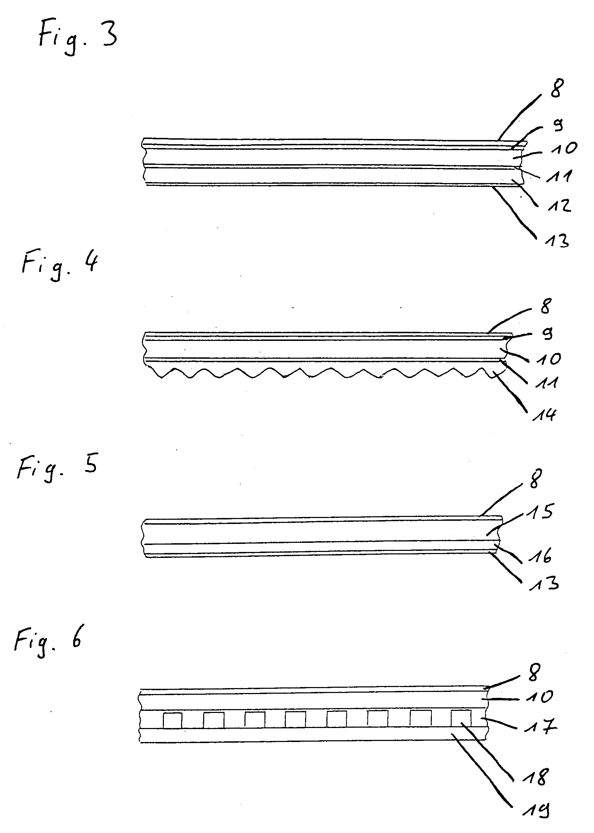

Die Fig. 3 bis 6 zeigen mögliche Varianten des Schichtaufbaus eines erfindungsgemäßen Dämmaterials.

Gemäß Fig. 3 ist die am weitesten innen liegende Schicht bzw. diejenige Schicht, die am nächsten an der schallabstrahlenden Geräuschquelle anzuordnen ist, aus einer Gleitfolie 13, insbesondere einer HD-PE-Gleitfolie gebildet, die beispielsweise 10 bis 20 µm dick ist.

An diese Gleitfolie 13 schließt sich eine ungefähr 2mm dicke Schicht 12 aus Schaumstoffmaterial an, welche auf der der Gleitfolie 13 abgewandten Seite mit einer Bleifolie 11 verbunden ist, deren Dicke ungefähr 0,5 mm beträgt.

Weiterhin ist eine Schaumstoffschicht 10 vorgesehen, deren Dicke ungefähr 2 mm beträgt und die mit ihrer einen Seite mit der erwähnten Bleifolie 11 und mit ihrer anderen Seite mit einer weiteren Bleifolie 9 verbunden ist, wobei die Bleifolie 9 entsprechend der Bleifolie 11 ausgeführt ist.

Die äußerste Schicht des Dämmaterials gemäß Fig. 3, d.h. die von der zu dämmenden Geräuschquelle am weitesten entfernte Schicht ist als Folie, Gitter oder Vlies 8 ausgebildet.

Die vier äußersten bzw. von der zu dämmenden Geräuschquelle am weitesten entfernt gelegenen Schichten sind bei einem Dämmaterial gemäß Fig. 4 ebenso aufgebaut wie bei dem beschriebenen Dämmaterial gemäß Fig. 3.

Die innenliegendste Schicht, d.h. die der zu dämmenden Geräuschquelle am nächsten gelegene Schicht, welche sich bei einem Dämmaterial gemäß Fig. 4 an die Bleifolie 11 anschließt, ist aus einem Rillenschaummaterial 14 gebildet, welches insbesondere ungefähr 9 mm dick ist.

Die am weitesten innenliegende Schicht bei einem Dämmaterial gemäß Fig. 5 ist aus einer Gleitfolie 13 gebildet, welche entsprechend der in Verbindung mit Fig. 3 erwähnten Gleitfolie ausgebildet sein kann.

An die Gleitfolie 13 schließt sich eine ungefähr 4 bis 6 mm dicke Schaumstoffschicht 16 an, welche auf der der Gleitfolie 13 abgewandten Seite mit einer Schicht 15 aus einem Material hoher Dichte verbunden ist. Dieses Material kann zumindest teilweise aus Metall, insbesondere aus Blei, Stahl, Kupfer oder Messing und/oder einem silikatischen Werkstoff, insbesondere aus Sand bestehen.

Die äußerste Schicht des Dämmaterials gemäß Fig. 5, die sich direkt an die Schicht 15 aus Material hoher Dichte anschließt, ist ebenso wie bei den Ausführungsformen gemäß den Fig. 3 und 4 aus einer Folie, einem Gitter oder einem Vlies 8 gebildet.

Letzteres gilt auch für die Ausführungsform gemäß Fig. 6, bei der sich an die äußerste Schicht 8 eine insbesondere ungefähr 2 mm dicke Schaumstoffschicht 10 anschließt, welche auf ihrer der äußersten Schicht 8 abgewandten Seite mit einem Folienkissen 17 verbunden ist, welches Lufteinschlüsse 18 beliebiger Form aufweist und in denjenigen Bereichen, in denen keine Lufteinschlüsse 18 vorhanden sind, mit Sand, Gips, Bleikugeln oder dergl. gefüllt ist.

Die innenliegendste Schicht eines Dämmaterials gemäß Fig. 6 ist aus einer Schaumstoffschicht 19 gebildet, welche mit dem Folienkissen 17 verbunden ist.

Bei den vorstehend beschriebenen Ausführungsformen gemäß den Fig. 3 bis 6 dienen die Schaumstoffschichten jeweils in erster Linie der Körperschalldämmung und die Blei oder andere Materialien hoher Dichte enthaltenden Schichten in erster Linie der Luftschalldämmung.

Die Schicht 8 gemäß den Fig. 3 bis 6 kann je nach Ausbildungsform die Funktionen der Schichten 3, 4, 5 gemäß den Fig. 1 und 2 übernehmen.

Die Erfindung ist nicht auf die in den Figuren dargestellten Ausführungsbeispiele beschränkt. Es lassen sich eine Vielzahl anderer, unterschiedliche Schichtaufbauten aufweisende Ausführungsformen realisieren, deren Form an die jeweils zu dämmenden Elemente sowie an die jeweiligen akustischen und/oder wärmetechnischen Probleme angepaßt werden kann.

## Patentansprüche

1. Dämmaterial für Rohrleitungen, Formstücke, Sanitärgegenstände, Maschinenkapselungen, haustechnische Geräte und Anlagen, Geräuschquellen in mechanischen Werkstätten und dgl. mit zumindest zwei übereinander angeordneten Schichten, wobei zumindest eine Schicht körperschalldämmend ausgebildet ist,
dadurch **gekennzeichnet,**
daß zumindest eine weitere Schicht (2) luftschalldämmend ausgebildet ist.

2. Dämmaterial nach Anspruch 1,
dadurch **gekennzeichnet,**
daß die körperschalldämmende Schicht (1, 1') aus einem weichen Material, insbesondere aus geschlossenzelligem Schaumstoff geringer Dichte besteht und/oder daß die luftschalldämmende Schicht (2) aus einem Material hoher Dichte besteht, wobei insbesondere die luftschalldämmende Schicht (2) zumindest teilweise aus Metall, insbesondere aus Blei, Stahl, Kupfer oder Messing und/oder einem silikatischen Werkstoff, insbesondere aus Sand besteht.

3. Dämmaterial nach einem der vorhergehenden Ansprüche,
dadurch **gekennzeichnet,**
daß die luftschalldämmende Schicht (2) zumindest bereichsweise flexibel ausgebildet ist und somit einem zu dämmenden Gegenstand oder einer zu dämmenden Einrichtung angepaßt werden kann, wobei insbesondere die luftschalldämmende Schicht (17) zumindest bereichsweise aus einem starren, luftschalldämmenden Material hoher Dichte besteht.

4. Dämmaterial nach einem der vorhergehenden Ansprüche,
dadurch **gekennzeichnet,**
daß die körperschalldämmende Schicht (1, 1') zumindest in einem Bereich mit einem Abstand von etwa 1 mm bis 10 mm von der schallabstrahlenden Geräuschquelle angeordnet ist und/oder daß die köperschalldämmende Schicht (1, 1') näher an der schallabstrahlenden Geräuschquelle angeordnet ist als die luftschalldämmende Schicht (2), wobei sich insbesondere die körperschalldämmende Schicht (1, 1') bis direkt an den zu dämmenden Gegenstand erstreckt.

5. Dämmaterial nach einem der vorhergehenden Ansprüche,
dadurch **gekennzeichnet,**
daß die körperschalldämmende Schicht (1') zumindest schallseitig Hervorhebungen und Vertiefungen insbesondere in Form einer Rillen-, Noppen- und ähnlichen Struktur aufweist und/oder daß auf der der Schallseite abgewandten Seite der körper- bzw. luftschalldämmenden Schichten (1, 1', 2) eine Faser- oder Schaumstoffschicht (3) angeordnet ist.

6. Dämmaterial nach einem der vorhergehenden Ansprüche,
dadurch **gekennzeichnet,**
daß eine Schicht, insbesondere eine körperschalldämmende Schicht (1, 1') wärmedämmend ausgebildet ist und/oder daß auf der der Schallseite abgewandten Seite der beiden körper- bzw. luftschalldämmenden Schichten (1, 1', 2) eine dampfdichte oder dampfbremsende Schicht (4) angeordnet ist, insbesondere wenn die luftschalldämmenden Schichten nicht selbst als Feuchtigkeits- und/oder Dampfsperre dienen, wobei insbesondere zwischen der dampfdichten oder dampfbremsenden Schicht und einer der Schallseite abgewandten Außenschicht eine zur Tauwasseraufnahme geeignete, insbesondere als Faserschicht ausgebildete Polsterlage angeordnet ist, und/oder die dem zu dämmenden Gegenstand abgewandte Oberfläche, insbesondere die Außenschicht des Dämmaterials durch ein reißfestes Material, insbesondere durch ein verstärkendes Gittergewebe (5) gebildet ist.

7. Dämmaterial nach einem der vorhergehenden Ansprüche,
dadurch **gekennzeichnet,**
daß die einzelnen, insbesondere aneinandergrenzenden Schichten von außen nach innen folgendermaßen aufgebaut sind:
- Folie, Gitter und/oder Vlies (8),
- Bleifolie (9), insbesondere ungefähr 0,5 mm dick,
- Schaummaterial (10), insbesondere ungefähr 2 mm dick,
- Bleifolie (11), insbesondere ungefähr 0,5 mm dick,
- Schaummaterial (12), insbesondere ungefähr 2 mm dick,
- Gleitfolie (13), insbesondere HD-PE-Gleitfolie, insbesondere ungefähr 10 bis 20 µm dick,
wobei insbesondere die Schaumschicht (12) sowie die Gleitfolie (13) durch eine Schicht aus Rillenschaum (9) ersetzt sind, die insbesondere ungefähr 9 mm dick ist.

8. Dämmaterial nach einem der Ansprüche 1 bis 6,
dadurch **gekennzeichnet,**
daß die einzelnen, insbesondere aneinandergrenzenden Schichten von außen nach innen folgendermaßen aufgebaut sind:
- Folie, Gitter und/oder Vlies (8),
- Schicht (15) aus einem Material hoher Dichte, z.B. aus Sand, Kupfer, Messing, Stahl oder dgl.,
- Schaumstoffschicht (16), insbesondere 4 bis 6 mm dick,
- Gleitfolie (13),
oder daß die einzelnen, insbesondere aneinandergrenzenden Schichten von außen nach innen folgendermaßen aufgebaut sind:
- Folie, Gitter und/oder Vlies (8),
- Schaumstoffschicht (10),
- Folienkissen (17), welches insbesondere Lufteinschlüsse (18) aufweist und in den nicht mit Luft ausgefüllten Bereichen mit beispielsweise Sand, Gips, Bleikugeln oder dgl. gefüllt ist,
- Schicht (19) aus Schaummaterial.

9. Dämmaterial nach einem der vorhergehenden Ansprüche,
dadurch **gekennzeichnet,**
daß die einzelnen Schichten (1, 1', 2, 3, 4, 5) einen Verbund bilden, der zu Schläuchen, Formstücken, Platten usw. für Rohre, Gegenstände der Haustechnik und insbesondere der Sanitärtechnik verwendet wird, wobei insbesondere der Verbund zumindest aus zwei Abschnitten gebildet ist, die aneinander mittels einer Näh-, Heft-, Klammer-, Klebe-, Nietverbindung und/oder dgl. befestigbar sind und/oder ein Schlauchverbund bzw. ein Verbundformstück im wesentlichen in Längsrichtung geschlitzt sind.

10. Dämmaterial nach Anspruch 9,
dadurch **gekennzeichnet,**
daß der Schlitz mittels Haft-, Klett- und/oder Klebebändern verschließbar ist, die am Schlauchverbund bzw. am Verbundformstück insbesondere beiderseits des Schlitzes befestigbar sind und/oder daß der Schlitz insbesondere zusätzlich mittels Klammern oder mittels einer Naht verschließbar ist.
